# EUROPEAN PATENT APPLICATION

(11) **EP 4 080 814 A1**
(43) Date of publication of application: **26.10.2022**
(21) Application number: 21169152.2
(22) Date of filing: 19.04.2021
(51) Int. Cl.: H04L 9/08, H04L 9/32

(54) **CRYPTOGRAPHIC METHOD USING A HASH-BASED SIGNATURE SCHEME AND MERKLE TREE TRAVERSAL TECHNIQUES**

(71) Applicant: Continental Automotive Technologies GmbH, 30165 Hannover (DE)
(72) Inventor: Stöttinger, Marc Sebastian Patric, 65824 Schwalbach a. Ts. (DE)
(74) Representative: Continental Corporation

(57) **Abstract**

The present invention is related to a computer implemented cryptographic method using a hash-based signature scheme and Merkle tree traversal techniques. The present invention is further related to a system using such method. To reduce the amount of storage to store the Merkle tree used for the signature generation in hash-based signature schemes, the method comprises selecting the traversal technique in dependency of a number of signatures SN used in accordance with the hash-based signature scheme.

## Description

The present invention is related to a computer implemented cryptographic method using a hash-based signature scheme and Merkle tree traversal techniques. The present invention is further related to a system using such method.

Quantum computing is one of the uprising technologies nowadays. This technology brings a lot of advantages and a tremendous increment of computational power. However, one drawback of this technologies is that traditional asymmetric cryptographic algorithms, i.e. ECC and RSA, no longer are secure. Therefore, different standardization bodies and researcher investigate into the area of post-quantum cryptography. One very promising class of algorithms for future security application with regards to signature handling are so called hash-based schemes. The advantage of hash-based schemes is that the security of these constructions is well understood.

The Bachelor Thesis "Merkle Tree Traversal Techniques" from Boris Ederov [1] comprises a basic description of different Merkle tree traversal techniques.

Nevertheless, hash-based schemes have two known drawbacks:
- Hash-based schemes can only be used for signature handling and not encryption operations and
- Hash-based schemes consume a lot of memory for signature generation, because these schemes exploit Merkle tree structures of hashed values for establishment of few-time signatures.

It is an object of the present invention to reduce the amount of storage to store the Merkle tree used for the signature generation in hash-based signature schemes.

This object is achieved by a computer implemented cryptographic method and system according to the independent claims.

The dependent claims include advantageous further developments and improvements of the present principles as described below.

According to a first aspect of the invention, a computer implemented cryptographic method using a hash-based signature scheme and Merkle tree traversal techniques comprises:
- selecting the traversal technique in dependency of a number of signatures SN used in accordance with the hash-based signature scheme.

There exist different Merkle tree traversal techniques which may be used in accordance with hash-based signature schemes. It has been shown that by selecting the traversal technique in dependency of the number signatures SN used in accordance with the hash-based signature scheme, the storage size of the Merkle tree can be reduced.

In an embodiment of the present disclosure, a classic Merkle tree traversal technique is selected if the number of signatures SN is < 2^3. Classic Merkle traversal techniques perform best for Merkle trees of up to a size of 3 or up to a number of 8 signatures.

In another embodiment of the present disclosure, a fractal traversal technique is selected if the number of signatures SN is 2^3 ≤ SN ≤ 2^16. The fractal traversal technique provides the lowest storage complexity from a number of 8 up to a number of 2^16 signatures.

In an embodiment of the present disclosure, a logarithmic traversal technique is selected if the number of signatures SN is > 2^16. The logarithmic traversal technique has the lowest storage complexity for large Merkle trees that can be used to generate more than 2^16 signatures.
1. Dynamic select traversal technique due to the number of planed signatures with the existing public and private key pair.
2. Build storage efficient hierarchical private and public key structures for signature handling based on a priory selection of traversal technique during key generation time.

In another embodiment of the present disclosure, selecting the traversal technique is based on the number of planned signatures with existing public and private key pairs of the hash-based signature scheme. The storage consumption can be reduced and tailored to the actual needs regarding required number of signatures for each private public key pair.

In yet another embodiment of the present disclosure, selecting the traversal technique is carried out during key generation time of the hash-based signature scheme. Based on this embodiment it is possible to set up a storage efficient hierarchical private and public key structure for signature handling. The advantage of an adaption during key generation time is that the size of the Merkle tree is adaptable and the storage space can be managed during the key generation time. Thus, no hard constrain for an amount of signatures needs to be set during development time.

According to a second aspect of the invention, a data processing system comprising a processor configured to perform the cryptographic method in accordance to the present invention.

According to a third aspect of the invention, a computer program product comprises instructions which, when the program is executed by a computer, cause the computer to carry out the cryptographic method in accordance to the present invention.

According to a fourth aspect of the invention, a computer-readable data storage medium comprises instructions which, when executed by a computer, cause the computer to carry out the cryptographic method in accordance to the present invention.

Further features of the present invention will become apparent from the following description and the appended claims in conjunction with the figures.

### Figures

Fig. 1 shows a sketch of an embodiment of a cryptographic method according to the invention,
Fig. 2 shows a sketch of space requirements for different Merkle tree traversal techniques, and
Fig. 3 shows a sketch of an embodiment of a system according to the invention.

### Detailed description

For a better understanding of the principles of the present invention, embodiments of the invention will be explained in more detail below with reference to the figures. Like reference numerals are used in the figures for the same or equivalent elements and are not necessarily described again for each figure. It is to be understood that the invention is not limited to the illustrated embodiments and that the features described may also be combined or modified without departing from the scope of the invention as defined in the appended claims.

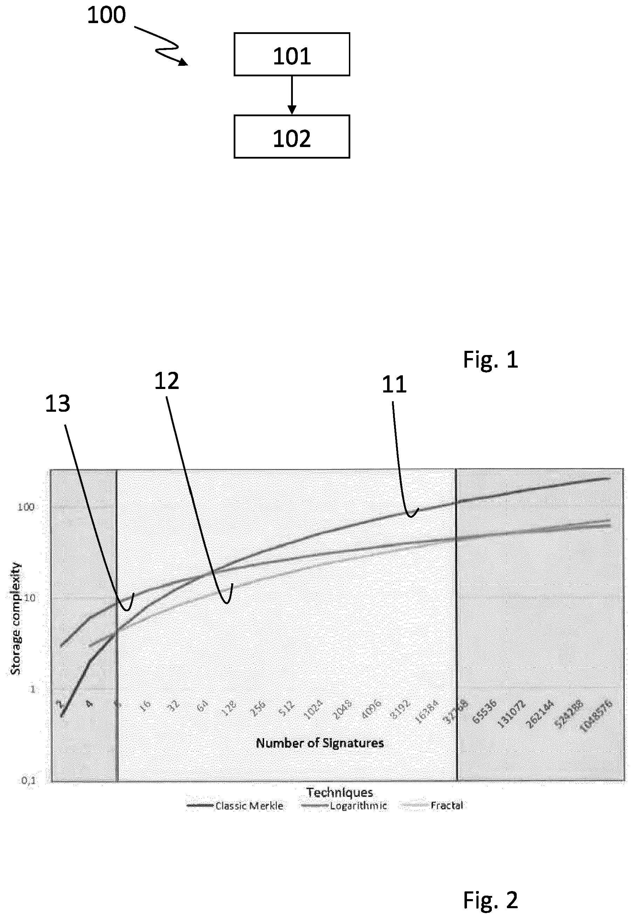

Fig. 1 shows a sketch of an embodiment of a cryptographic method 100 according to the invention. The cryptographic method 100 uses 101 a hash-based signature scheme and Merkle tree traversal techniques. In dependency of the number of signatures SN used in accordance with the hash-based signature scheme a traversal technique 11, 12, 13 is selected 102. If the number of signatures SN is < 2^3 a classic 11 Merkle tree traversal technique is selected 102. If the number of signatures SN is 2^3 ≤ SN ≤ 2^16 a fractal 12 traversal technique is selected 102. If the number of signatures SN is > 2^16 a logarithmic 13 traversal technique is selected 102.

Optionally, the decision which traversal technique 11, 12, 13 is selected 102 is based on the number of planned signatures with existing public and private key pairs of the hash-based signature scheme. In addition or alternatively, the selection 102 of the traversal technique 11, 12, 13 is carried out during key generation time of the hash-based signature scheme.

Fig. 2 shows a sketch of space requirements for different Merkle tree traversal techniques. The storage complexity is shown in dependency of the number of signatures for three different Merkle tree traversal techniques 11, 12, 13, namely a classic Merkle tree travesal technique 11, a fractal traversal technique and a logarithmic traversal technique. As can be seen all three traversal techniques 11, 12, 13 provide for different numbers of signatures the lowest storage complexity. Classic Merkle tree traversal techniques performs best for hash-trees of up to a number of 8 signatures. The fractal traversal technique provides the lowest storage complexity from 8 up to 2^16 signatures. The logarithmic traversal technique has the lowest storage complexity for large Merkle trees that can be used to generate more than 2^16 signatures.

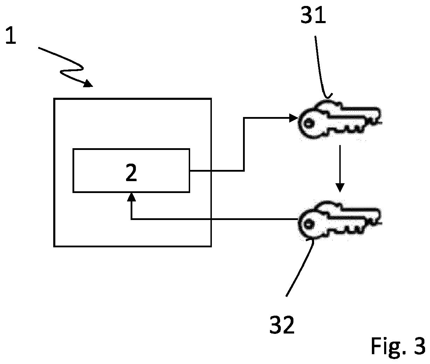

Fig. 3 shows a sketch of an embodiment of a system 1 according to the invention. The system 1 comprises an embedded device 2 that uses a first private public key pair 31 for updating a second public private key pair 32. The second key pair 32 is used for secure software updates of the embedded device 2. During the live time of the embedded device 2 the second key pair 32 needs to be updated up to six times for revocation cases of the current second private key pair 32. For updating the second key pair 32 with the used hash-based signature scheme, a classic Merkle traversal technique 11 is selected. In addition, in the specification of the embedded device 2, a monthly software update for the embedded device 2 is considered for a live time of five years. For updating the embedded device in accordance with the specification, a fractal traversal technique 12 is selected for supporting up to seventy signatures for each software update. Optionally, the selection of the traversal technique 11, 12, 13 is carried out during key generation time of the hash-based signature scheme, e.g. in case for a later series, the amount of signatures using the first key pair 31 or the second key pair 32 changes.

### References

[1] B. Ederov: "Merkle Tree Traversal Techniques ". Bachelor Thesis, April 2007, Darmstadt University of Technology, Department of Computer Science, Cryptography and Computer Algebra.

## Claims

1. A computer implemented cryptographic method (100) using (101) a hash-based signature scheme and Merkle tree traversal techniques, the method comprising:
• selecting (102) the traversal technique in dependency of a number of signatures SN used in accordance with the hash-based signature scheme.

2. A computer implemented cryptographic method (100) according to claim 1, wherein selecting (102) the traversal technique is based on the number of planned signatures with existing public and private key pairs of the hash-based signature scheme.

3. A computer implemented cryptographic method (100) according to one of claims 1 or 2, wherein selecting (102) the traversal technique is carried out during key generation time of the hash-based signature scheme.

4. A computer implemented cryptographic method (100) according to anyone of the preceding claims, wherein a classical (11) Merkle tree traversal technique is selected if the number of signatures SN is < 2^3.

5. A computer implemented cryptographic method (100) according to anyone of the preceding claims, wherein a fractal (12) traversal technique is selected if the number of signatures SN is 2^3 ≤ SN ≤ 2^16.

6. A computer implemented cryptographic method (100) according to anyone of the preceding claims, wherein a logarithmic (13) traversal technique is selected if the number of signatures SN is > 2^16.

7. A data processing system (1) comprising a processor configured to perform the method (100) of any one of claims 1-6.

8. A computer program product comprising instructions which, when the program is executed by a computer, cause the computer to carry out the method (100) of any one of claims 1-6.

9. A computer-readable data storage medium comprising instructions which, when executed by a computer, cause the computer to carry out the method (100) of any one of claims 1-6.
